# EUROPEAN PATENT SPECIFICATION

(11) **EP 4 177 327 B1**
(45) Date of publication and mention of the grant of the patent: **16.09.2026**
(21) Application number: 21832086.9
(22) Date of filing: 18.06.2021
(51) Int. Cl.: A23B 70/10, A23L 2/38, A23L 2/52, A23L 2/56, C12C 5/02, C12C 11/11, C12C 12/04

(54) **BEER-FLAVORED BEVERAGE**
GETRÄNK MIT BIERGESCHMACK
BOISSON AROMATISÉE À LA BIÈRE

(30) Priority: 02.07.2020 JP 2020114961; 02.07.2020 JP 2020114966
(43) Date of publication of application: 10.05.2023
(73) Proprietor: Suntory Holdings Limited, Osaka 530-8203 (JP)
(72) Inventor: KATO, Yuichi, Fuchu-shi, Tokyo 183-8533 (JP)
(74) Representative: Vossius & Partner Patentanwälte Rechtsanwälte mbB
(86) International application number: PCT/JP2021/023187
(87) International publication number: WO 2022/004430

(56) References cited:
- WO-A1-2018/143038
- CN-A- 104 711 159
- CN-A- 104 711 159
- JP-A- H0 937 758
- JP-A- S4 818 495
- US-A- 3 936 269
- US-A- 3 936 269
- US-A1- 2019 380 361
- SHIGEYOSHI YOSHIDA: "Part 1: General Ingredients of Beer", NIPPON JOZO KYOKAI ZASSHI - JOURNAL OF THE SOCIETY OF BREWING,JAPAN, vol. 71, no. 7, 1 January 1976 (1976-01-01), JP, pages 505 - 510, XP055906499, ISSN: 0369-416X, DOI: 10.6013/jbrewsocjapan1915.71.505
- RODDA LUKE N. ET AL: "Alcohol congener analysis and the source of alcohol: a review", FORENSIC SCIENCE, MEDICINE, AND PATHOLOGY, vol. 9, no. 2, 3 March 2013 (2013-03-03), Boston, pages 194 - 207, XP055895814, ISSN: 1547-769X, DOI: 10.1007/s12024-013-9411-0
- RODDA LUKE N., BEYER JOCHEN, GEROSTAMOULOS DIMITRI, DRUMMER OLAF H.: "Alcohol congener analysis and the source of alcohol: a review", FORENSIC SCIENCE, MEDICINE, AND PATHOLOGY, SPRINGER US, BOSTON, vol. 9, no. 2, 1 June 2013 (2013-06-01), Boston , pages 194 - 207, XP055895814, ISSN: 1547-769X, DOI: 10.1007/s12024-013-9411-0
- DEŽELAK MATJAŽ, ZARNKOW MARTIN, BECKER THOMAS, KOŠIR IZTOK JOŽE: "Processing of bottom-fermented gluten-free beer-like beverages based on buckwheat and quinoa malt with chemical and sensory characterization : Bottom-fermented gluten-free beer-like beverages based on buckwheat and quinoa malt", JOURNAL OF THE INSTITUTE OF BREWING., INSTITUTE OF BREWING. LONDON., GB, 1 September 2014 (2014-09-01), GB , pages n/a - n/a, XP055895819, ISSN: 0046-9750, DOI: 10.1002/jib.166
- YOSHIDA, JUKO: "Chapter 1 General ingredients of beer", JOURNAL OF THE SOCIETY OF BREWING, JAPAN, vol. 71, no. 7, 1976, pages 505 - 510, XP055906499, DOI: https://doi.org/10.6013/jbrewsocjapan1915.71.505

## Description

### [Technical Field]

The present invention relates to a beer-taste beverage.

### [Background Art]

Beer-taste beverages produced using water and malt as a portion of raw materials have been variously developed.

For example, Patent Literature 1 discloses an unfermented non-alcoholic beer-taste beverage having a total polyphenol content of 100 ppm or more and containing a masking material selected from cyclodextrin and thaumatin, for the purpose of providing an unfermented beer-taste beverage with much less lingering astringency and good aftertaste sharpness.

Patent Literature 2 discloses a technique related to a method for producing a fermented beer-taste beverage having suppressed off-flavor, good sharpness, and coffeeness while using caffeine-less coffee.

Patent Literature 3 discloses a method of sterilizing a perishable material, comprising the steps of heating frozen dimethyl dicarbonate to a temperature sufficient to liquify the dimethyl dicarbonate while maintaining the dimethyl dicarbonate under an atmosphere of a dry inert gas, admixing the liquified dimethyl dicarbonate with a perishable material, immediately thereafter subjecting the perishable material to a temperature in the range of 25 °C to 50 °C to increase the antimicrobial activity of the dimethyl dicarbonate, and thereafter cooling the material to room temperature.

Patent Literature 4 provides a self-decomposing cold sterilization technology for fresh beer preservation, wherein the preservation process consists of the following: A. After the beer is fermented and matured, a pH adjuster is added to the finished beer to make it slightly acidic; B. Before the preservation process, the temperature of the beer in the storage tank is controlled within a certain range; C. The beer preservative added is evenly mixed with the beer through a static mixer placed on the beer conveying line; D. The concentration of dimethyl dicarbonate in fresh beer is controlled by adjusting the ratio of the flow rate of the DMDC metering pump to the beer delivery pump; E. The fresh beer added with dimethyl dicarbonate is that after the beer is evenly mixed, it can be directly bottled without pasteurization or sterile filtration treatment, and can be consumed after storage for 24 hours at room temperature.

Patent Literature 5 provides a non-alcoholic beer-taste beverage packed in a container, comprising a preservative, a sweet substance and a bitter substance, wherein the beverage has a sweetness/bitterness ratio of 100 to 1200, and the sweetness/bitterness ratio is a ratio of a degree of sweetness expressed in ppm by mass in terms of sucrose to a bitterness unit (BU).

An overview of the general components of beer and their characteristics can be found in Non-Patent Literature 1.

Non-Patent Literature 2 examines the forensic application of alcohol congener analysis in determining the source of alcohol and other techniques.

### [Citation List]

### [Patent Literature]

[Patent Literature 1] JP-A-2015-221019
[Patent Literature 2] JP-A-2019-208417
[Patent Literature 3] US 3936269 A
[Patent Literature 4] CN 104711159 A
[Patent Literature 5] US 2019/380361 A1

### [Non-Patent Literature]

[Non-Patent Literature 1] SHIGEYOSHI YOSHIDA: "Part 1: General Ingredients of Beer", NIPPON JOZO KYOKAI ZASSHI - JOURNAL OF THE SOCIETY OF BREWING, JAPAN, vol. 71, no. 7, 1 January 1976 (1976-01-01), pages 505-510, JP ISSN: 0369-416X, DOI: 10.6013/jbrewsocjapan1915.71.505.
[Non-Patent Literature 2] RODDA LUKE N. ET AL: Alcohol congener analysis and the source of alcohol: a review, FORENSIC SCIENCE, MEDICINE, AND PATHOLOGY, vol. 9, no. 2, 3 March 2013 (2013-03-03), pages 194-207, XP055895814, Boston ISSN: 1547-769X, DOI: 10.1007/s12024-013-9411-0.

### [Summary of Invention]

### [Technical Problem]

Under these circumstances, there is a demand for a novel beer-taste beverage more suitable as a beer-taste beverage.

### [Solution to Problem]

The present invention provides for example, an unfermented non-alcoholic beer-taste beverage having a methanol concentration of 8.0 to 600 mg/L, and a total nitrogen content and an apparent extract concentration adjusted to predetermined ranges. Specifically, the present invention is as described in the appended claims.

### [Advantageous Effects of Invention]

The beer-taste beverage according to a preferred aspect of the present invention is more suitable as a beer-taste beverage and is a beverage having, for example, good drinkability suitable for a beer-taste beverage while sweet scent unsuitable for a beer-taste beverage and sweet taste left on the tongue are suppressed.

### [Description of Embodiments]

### 1. Beer-taste beverage

The beer-taste beverage is an unfermented beer-taste beverage that has not undergone the fermentation step.

In general, the non-alcoholic beer-taste beverage is a non-alcoholic unfermented beer-taste beverage prepared so as to have beer-like flavor without a fermentation step. In the present invention, the beer-taste beverage is a non-alcoholic unfermented beer-taste beverage.

Besides, the beer-taste beverage may be a malt-based beer-taste beverage obtained with malt as a raw material, or may be a malt-free beer-taste beverage obtained without the use of malt. A malt-based beer-taste beverage is preferred, and a barley malt-based beer-taste beverage is more preferred.

Sweet scent unsuitable for a beer-taste beverage or unsuitable sweet taste left on the tongue, which is ascribable to methanol, may be problematic for beer-taste beverages. For example, in non-alcoholic beer-taste beverages, the unsuitable sweet scent or the unsuitable sweet taste left on the tongue tends to be strongly perceivable. Also, in fermented beer-taste beverages, the unsuitable sweet scent or the unsuitable sweet taste left on the tongue, which is ascribable to methanol, may be more strongly perceivable due to incompatibility with aroma components or the like resulting from a fermentation process.

Methanol in beverages is abundantly contained in fruit juice or the like. In the case of using a fruit as a raw material, the resulting beverage tends to have a high methanol concentration.

In recent years, studies have been made to supplement beverages with dimethyl dicarbonate having a germicidal effect. Dimethyl dicarbonate exhibits its germicidal effect by inhibiting enzymatic reaction through the methoxy-carboxylation of a histidine group containing imidazole in alcohol dehydrogenase and glyceraldehyde-3-phosphate dehydrogenase in a beverage after addition. Then, the dimethyl dicarbonate added into the beverage is degraded into carbon dioxide and methanol in a few hours by hydrolysis. Hence, in such a beverage supplemented with dimethyl dicarbonate, methanol results from hydrolysis and disadvantageously causes the sweet scent unsuitable for a beer-taste beverage or the unsuitable sweet taste left on the tongue, which is ascribable to methanol.

To cope with such problems ascribable to methanol in beverages, in the beer-taste beverage of the present invention, a total nitrogen content and an apparent extract concentration were adjusted to 0.3 mg/100 mL or more and 0.26 to 2.8% by mass, respectively, for a beverage having a methanol concentration of 8.0 to 600 mg/L. Such adjustment can yield a beverage having good drinkability suitable for a beer-taste beverage while sweet scent unsuitable for a beer-taste beverage and sweet taste left on the tongue are suppressed.

The beer-taste beverage is an unfermented non-alcoholic beer-taste beverage.

In the present specification, the "non-alcoholic beer-taste beverage" means a carbonated beverage having beer-like flavor which does not belong to "liquors" defined by the Liquor Tax Act and interpretive letters on laws and regulations, etc. related to liquor administration enforced on April 1, 2018. The "unfermented non-alcoholic beer-taste beverage" means a beverage produced as the non-alcoholic beer-taste beverage described above without a fermentation step using yeast.

The alcohol percentage of the unfermented non-alcoholic beer-taste beverage of the present invention can be less than 1% (v/v) and may be less than 0.5% (v/v), less than 0.1% (v/v), less than 0.01% (v/v), or less than 0.005% (v/v).

In the present specification, the alcohol percentage is indicated by percentage based on volume/volume (v/v%). The alcohol content of the beverage can be measured by any method known in the art and can be measured with, for example, an oscillating densitometer.

The unfermented non-alcoholic beer-taste beverage of the present invention, is an unfermented non-alcoholic beer-taste beverage having a methanol concentration of 8.0 to 600 mg/L, a total nitrogen content of 0.3 mg/100 mL or more, and an apparent extract concentration of 0.26 to 2.8% by mass. Not encompassed by the wording of the appended claims, the unfermented non-alcoholic beer-taste beverage may be an unfermented non-alcoholic beer-taste beverage being supplemented with dimethyl dicarbonate and having a total nitrogen content of 0.3 mg/100 mL or more and an apparent extract concentration of 0.26 to 2.8% by mass.

In the unfermented, non-alcoholic beer-taste beverage of the present invention, the methanol concentration is 8.0 mg/L or higher and may be 9.5 mg/L or higher, 10 mg/L or higher, 15 mg/L or higher, 20 mg/L or higher, 25 mg/L or higher, 30 mg/L or higher, 35 mg/L or higher, 40 mg/L or higher, 45 mg/L or higher, 50 mg/L or higher, 55 mg/L or higher, 60 mg/L or higher, 65 mg/L or higher, 70 mg/L or higher, 75 mg/L or higher, 80 mg/L or higher, 85 mg/L or higher, or 90 mg/L or higher.

The methanol concentration is 600 mg/L or lower and may be 590 mg/L or lower, 580 mg/L or lower, 570 mg/L or lower, 560 mg/L or lower, 550 mg/L or lower, 540 mg/L or lower, 530 mg/L or lower, 520 mg/L or lower, 510 mg/L or lower, 500 mg/L or lower, or 490 mg/L or lower.

In the present specification, the methanol concentration can be measured by gas chromatography.

The methanol concentration described above is the mass of methanol (mg) contained per L of the beverage. The mass of methanol also includes the mass of, for example, methanol derived from fruit juice when the beverage is supplemented with the fruit juice, and methanol resulting from the hydrolysis of dimethyl dicarbonate when the beverage is supplemented with the dimethyl dicarbonate.

In the beer-taste beverage of the present invention, the total nitrogen content of 0.3 mg/100 mL or more imparts good drinkability suitable for a beer-taste beverage to the beverage having a given methanol concentration.

In the unfermented non-alcoholic beer-taste beverage according to one aspect of the present invention, the total nitrogen content is 0.3 mg/100 mL or more, preferably 0.4 mg/100 mL or more, more preferably 0.7 mg/100 mL or more, more preferably 0.9 mg/100 mL or more, more preferably 1.5 mg/100 mL or more, further preferably 2.0 mg/100 mL or more, further preferably 3.0 mg/100 mL or more, further preferably 4.0 mg/100 mL or more, still further preferably 4.5 mg/100 mL or more, still further preferably 5.0 mg/100 mL or more, still further preferably 6.0 mg/100 mL or more, particularly preferably 8.0 mg/100 mL or more, from the viewpoint described above.

In the unfermented non-alcoholic beer-taste beverage according to one aspect of the present invention, the total nitrogen content may be, for example, 350 mg/100 mL or less, 300 mg/100 mL or less, 250 mg/100 mL or less, 220 mg/100 mL or less, 200 mg/100 mL or less, 190 mg/100 mL or less, 180 mg/100 mL or less, 175 mg/100 mL or less, 150 mg/100 mL or less, 125 mg/100 mL or less, 100 mg/100 mL or less, 75 mg/100 mL or less, or 60 mg/100 mL or less.

In the present invention, the "total nitrogen content" is the total amount of all nitrogen compounds such as proteins and amino acids.

The total nitrogen content of the beer-taste beverage according to one aspect of the present invention can be controlled by adjusting the amount of a raw material with a relatively large nitrogen content used. Specifically, the total nitrogen content can be increased by increasing the amount of malt or the like with a large nitrogen content used. Examples of the raw material with a large nitrogen content include malt, soybean, yeast extracts, pea, and ungerminated grain. Examples of the ungerminated grain include ungerminated barley, wheat, rye, *Avena fatua,* oat, *Coix lacryma-jobi* var. *ma-yuen, Avena sativa,* soybean, and pea.

The total nitrogen content may be adjusted by appropriately setting the type of an enzyme, the amount of an enzyme (also including a proteolytic enzyme) added, the timing of addition of an enzyme, a proteolysis time in a preparation tank, pH in a preparation tank, a set temperature and a holding time in each temperature region in preparing wort, a boiling time and pH in a boiling step, etc.), and the like, in addition to the items related to the raw material.

In the present specification, the total nitrogen content of the beer-taste beverage can be measured by a method described in, for example, revised BCOJ beer analysis method (Journal of the Brewing Society of Japan, Brewery Convention of Japan [analysis committee] ed., enlarged and revised in 2013).

The beer-taste beverage according to one aspect of the present invention is preferably a beverage obtained with malt as a raw material from the viewpoint of being a beer-taste beverage having a total nitrogen content adjusted to the range mentioned above.

In the beer-taste beverage according to one aspect of the present invention, the malt ratio may be 1% by mass or more, 5% by mass or more, 10% by mass or more, 15% by mass or more, 20% by mass or more, 25% by mass or more, 30% by mass or more, 35% by mass or more, 40% by mass or more, 45% by mass or more, 50% by mass or more, 55% by mass or more, or 60% by mass or more and may be 100% by mass or less, 95% by mass or less, 90% by mass or less, 85% by mass or less, 80% by mass or less, 75% by mass or less, 70% by mass or less, 65% by mass or less, 60% by mass or less, 55% by mass or less, or 50% by mass or less, based on the total amount (100% by mass) of raw materials except for water and hop from the viewpoint described above.

In the present specification, the malt ratio can be calculated according to the Liquor Tax Act and interpretive letters on laws and regulations, etc. related to liquor administration enforced on April 1, 2018.

The apparent extract concentration of the beer-taste beverage of the present invention is 0.26 to 2.8% by mass. Such adjustment of the apparent extract concentration can yield a beverage in which sweet scent unsuitable for a beer-taste beverage or sweet taste left on the tongue, which is ascribable to methanol, in a beverage having a given methanol concentration is suppressed.

In the unfermented non-alcoholic beer-taste beverage according to one aspect of the present invention, from the viewpoint described above, the apparent extract concentration is 0.26% by mass or more, preferably 0.28% by mass or more, more preferably 0.30% by mass or more and may be 0.35% by mass or more, 0.40% by mass or more, 0.50% by mass or more, or 0.60% by mass or more.

The apparent extract concentration is 2.8% by mass or less, and may be 2.7% by mass or less, 2.6% by mass or less, 2.5% by mass or less, 2.4% by mass or less, 2.3% by mass or less, 2.2% by mass or less, 2.0% by mass or less, 1.8% by mass or less, 1.7% by mass or less, 1.5% by mass or less, 1.3% by mass or less, 1.2% by mass or less, 1.1% by mass or less, or 1.0% by mass or less.

The apparent extract concentration of the beer-taste beverage according to one aspect of the present invention can be controlled by appropriately adjusting, for example, the type of a raw material, the amount of a raw material added, the amount of water added, saccharification conditions, the presence or absence of an enzyme used in saccharifying a raw material, and conditions of solid removal treatment.

In the present specification, the "apparent extract concentration" of the beverage can be measured by a method described in, for example, revised BCOJ beer analysis method (Journal of the Brewing Society of Japan, Brewery Convention of Japan [analysis committee] ed., enlarged and revised in 2013), with a degassed beverage as a sample.

In the beer-taste beverage according to one aspect of the present invention, the ratio of the total nitrogen content (unit: mg/100 mL) to the apparent extract concentration (unit: % by mass) [total nitrogen content/apparent extract concentration] is preferably 0.15 or more, more preferably 0.20 or more, further preferably 0.30 or more, still further preferably 0.50 or more, and is preferably 700 or less, more preferably 680 or less, more preferably 650 or less, further preferably 620 or less, further preferably 600 or less, still further preferably 580 or less, still further preferably 560 or less, particularly preferably 540 or less.

Within the above range of the ratio, good drinkability suitable for a beer-taste beverage is further improved while the sweet scent unsuitable for a beer-taste beverage or the sweet taste left on the tongue, which is ascribable to methanol, in a beverage having a given methanol concentration can be more effectively suppressed in the beverage.

ratio of the total nitrogen content (unit: mg/100 mL) to the apparent extract concentration (unit: % by mass) [total nitrogen content/apparent extract concentration] of the unfermented non-alcoholic beer-taste beverage is preferably 0.15 or more, more preferably 0.20 or more, further preferably 0.30 or more, still further preferably 0.50 or more, and is preferably 150 or less, more preferably 145 or less, further preferably 140 or less, still further preferably 135 or less, from the viewpoint described above.

From the viewpoint of being a beverage suitable as a beer-taste beverage, the bitterness unit of the beer-taste beverage according to one aspect of the present invention is preferably 50 BUs or less, more preferably 45 BUs or less, further preferably 40 BUs or less and may be 35 BUs or less, 32 BUs or less, 30 BUs or less, 28 BUs or less, 27 BUs or less, or 25 BUs or less.

When the beer-taste beverage according to one aspect of the present invention is a beverage obtained with hop as a raw material, the bitterness unit of the beverage may be 5.0 BUs or more, 7.0 BUs or more, 10 BUs or more, 12 BUs or more, 15 BUs or more, or 17 BUs or more.

When the beer-taste beverage according to one aspect of the present invention is a beverage obtained without the use of hop as a raw material, the bitterness unit of the beverage may be less than 5.0 BUs, 3.0 BUs or less, 2.0 BUs or less, 1.0 BUs or less, 0.5 BUs or less, or 0.3 BUs or less.

The bitterness unit of the beer-taste beverage according to one aspect of the present invention is an index for bitterness offered by a component derived from hop composed mainly of isohumulone, and can be controlled by appropriately adjusting the amount of hop or a hop-derived component (e.g., a hop extract) used.

In the present specification, the "bitterness unit" of the beverage can be measured by a measurement method described in "8.15 Bitterness unit" of revised BCOJ beer analysis method (Journal of the Brewing Society of Japan, Brewery Convention of Japan [analysis committee] ed., enlarged and revised in 2013).

The pH of the beer-taste beverage according to one aspect of the present invention is not particularly limited and is preferably lower than 4.0 and may be 3.9 or lower, 3.8 or lower, 3.7 or lower, 3.6 or lower, 3.5 or lower, 3.4 or lower, 3.3 or lower, 3.2 or lower, or 3.1 or lower. The pH is preferably 2.0 or higher from the viewpoint of being a beverage having improved flavor in which the generation of microbes is suppressed, and may be 2.1 or higher, 2.2 or higher, 2.3 or higher, 2.4 or higher, 2.5 or higher, 2.6 or higher, 2.7 or higher, 2.8 or higher, or 2.9 or higher.

The pH of the beer-taste beverage according to one aspect of the present invention can be controlled by appropriately adjusting the amount of an acidulant (which will be mentioned later) added.

The color of the beer-taste beverage according to one aspect of the present invention is not particularly limited and may be amber or gold as in usual beer, may be black as in black beer, or may be clear, colorless. Alternatively, the desired color may be applied thereto by the addition of a colorant or the like. The color of the beverage can be macroscopically identified and may be specified depending on total light transmittance, chromaticity, or the like.

The beer-taste beverage according to one aspect of the present invention may be in the form of a packaged beverage in which the beverage is packaged in a container. Examples of the container include bottles, plastic bottles, cans, and barrels. Particularly, a can, a bottle or a plastic bottle is preferred from the viewpoint of being easy to carry around.

### 1.1 Raw material

In the beer-taste beverage according to one aspect of the present invention, malt may be used, together with water, as a main raw material, or malt may not be used. The beer-taste beverage according to one aspect of the present invention may be a beverage obtained with hop as a raw material or may be a beverage obtained without the use of hop.

Further, dimethyl dicarbonate may be used as a germicide, and a preservative selected from benzoic acid, benzoate, and benzoic acid ester may be used as a preservative.

In addition, a sweetener, water-soluble dietary fiber, a bittering agent or a bitterness-imparting agent, an antioxidant, a fragrance, an acidulant, a salt, and the like may be used.

### 1.1.1 Malt and grain other than malt

In the case of using malt as a raw material, the malt refers to a material obtained by germinating, drying, and root-removing the seeds of barley, wheat, rye, *Avena fatua,* oat, *Coix lacryma-jobi* var. *ma-yuen, Avena sativa,* or the like, and is not limited by its producing area or variety.

The malt for use in one aspect of the present invention is preferably barley malt. The barley malt is malt that is used as one of the most general raw materials of Japanese beer-taste beverages. The type of barley includes two-row barley, six-row barley, or the like, any of which may be used. Normal malt as well as colored malt or the like may be used. When colored malt is used, different types of colored malt may be used in appropriate combination, or one type of colored malt may be used.

In the beer-taste beverage according to one aspect of the present invention, preferably, the malt used is appropriately selected according to the desired chromaticity of the beer-taste beverage. The malt to be selected may be used singly, or two or more thereof may be used in combination.

Grain other than malt may be used together with malt.

Examples of such grain include barley, wheat, rye, *Avena fatua,* oat, *Coix lacryma-jobi* var. *ma-yuen,* and *Avena sativa* which do not correspond to malt, rice (white rice, brown rice, etc.), corn, kaoliang, potato, pulses (soybean, pea, etc.), buckwheat, sorghum, foxtail millet, Japanese millet, and starch obtained therefrom, and their extracts.

When malt is not used, the beer-taste beverage is obtained using liquid sugar containing a carbon source, and a nitrogen source as an amino acid-containing material (e.g., soybean protein) such as the grain mentioned above other than malt.

In one aspect of the present invention, a smaller amount of barley, etc. used before malting is more preferred from the viewpoint of being a beer-taste beverage excellent in taste.

The "malting" described above means the step of germinating barley, etc. to produce malt. For example, barley is prepared into barley malt through the malting step. The preparation of malt from barley, etc. through the malting step can confer savory flavor. Use of malt can yield a beer-taste beverage having rich taste. On the other hand, a beer-taste beverage obtained using barley, etc. before malting has poor taste. Particularly, a beverage obtained using barley before malting might be a beverage having conspicuous grain-like odor unsuitable for a beer-taste beverage.

The beer-taste beverage according to one aspect of the present invention is preferably a beer-taste beverage free from barley, etc. obtained substantially without the use of barley, etc. before malting, more preferably a barley-free beer-taste beverage obtained substantially without the use of barley before malting, from the viewpoint described above.

In the present specification, the prescription "substantially without the use of barley, etc. (barley) before malting" is a prescription that denies an aspect of using barley, etc. (barley) before malting for a predetermined purpose, and is not a prescription that denies an aspect in which barley, etc. (barley) before malting is unintentionally or inevitably mixed into or present in raw materials.

However, in the beer-taste beverage according to one aspect of the present invention, a smaller proportion of the barley, etc. (barley) before malting used is more preferred. Specifically, the smaller proportion of the barley, etc. (barley) before malting used is usually less than 20 parts by mass per 100 parts by mass of the malt used as a raw material, in consideration of unintended or inevitable mixing or presence thereof, and may be less than 10 parts by mass, less than 5 parts by mass, less than 1 part by mass, less than 0.1 parts by mass, less than 0.01 parts by mass, less than 0.001 parts by mass, or less than 0.0001 parts by mass.

In one aspect of the present invention, fruit (also including dry fruit and a concentrate of fruit), fruit skin, or fruit juice (including concentrated fruit juice) may be used as a raw material.

As mentioned above, fruit juice contains methanol, which is responsible for sweet scent unsuitable for a beer-taste beverage or unsuitable sweet taste left on the tongue.

However, the beer-taste beverage according to one aspect of the present invention can be a beverage in which sweet scent unsuitable for a beer-taste beverage and sweet taste left on the tongue, which are ascribable to methanol, are suppressed, because the total nitrogen content and the apparent extract concentration are adjusted to predetermined ranges.

### 1.1.2 Hop

In the case of using hop for use in one aspect of the present invention, examples of the form of the hop include pellet hop, powder hop, and hop extracts. The hop used may be a hop processed product such as isomerized hop or reduced hop.

In the case of using hop in one aspect of the present invention, the amount of the hop added is appropriately adjusted and is preferably 0.0001 to 1% by mass with respect to the total amount of the beverage.

### 1.1.3 Dimethyl dicarbonate

The beer-taste beverage according to one aspect of the present invention may be a beverage supplemented with dimethyl dicarbonate.

The beer-taste beverage may be produced through a sterilization step involving heating or supplementation with a germicide. In the case of performing only sterilization by heating in the sterilization step, carbon dioxide is easily removed by heat. Unfortunately, this makes it difficult to prepare a beverage having a high carbon dioxide concentration or narrows the range of choice for materials of containers in such a way that containers having heat resistance must be used for packaged beverages. On the other hand, since dimethyl dicarbonate has a germicidal effect, its addition into a beverage can lower a sterilization temperature and additionally allows a sterilization step to be partially omitted. Thus, the problems described above can be circumvented.

Specifically, a beverage having a high carbon dioxide concentration can also be efficiently produced by sterilization using dimethyl dicarbonate. Furthermore, the degree of freedom of choice for containers to be packed with the beverage is also improved. Since dimethyl dicarbonate has a bactericidal effect, the amount of a preservative used in the beverage can also be reduced.

However, dimethyl dicarbonate added into a beverage becomes a methoxycarbonyl compound or the like and exhibits a germicidal effect, while degraded into carbon dioxide and methanol a few hours later. As mentioned above, methanol in a beverage is responsible for sweet scent unsuitable for a beer-taste beverage or unsuitable sweet taste left on the tongue.

By contrast, in the present invention, even the beer-taste beverage supplemented with dimethyl dicarbonate can be a beverage having good drinkability suitable for a beer-taste beverage while sweet scent unsuitable for a beer-taste beverage and sweet taste left on the tongue are suppressed, by adjusting the total nitrogen content and the apparent extract concentration to predetermined ranges.

The amount of the dimethyl dicarbonate added for use in one aspect of the present invention may be, for example, 15 mg/L or higher, 17 mg/L or higher, 20 mg/L or higher, 40 mg/L or higher, 60 mg/L or higher, 80 mg/L or higher, 100 mg/L or higher, 120 mg/L or higher, 140 mg/L or higher, 160 mg/L or higher, 180 mg/L or higher, or 200 mg/L or higher, and may be 1500 mg/L or lower, 1400 mg/L or lower, 1300 mg/L or lower, 1200 mg/L or lower, 1100 mg/L or lower, or 1000 mg/L or lower.

### 1.1.4 Preservative

The beer-taste beverage according to one aspect of the present invention may be a beverage further supplemented with a preservative selected from benzoic acid, benzoate, and benzoic acid ester.

These preservatives may each be used singly, or two or more thereof may be used in combination.

Examples of the benzoate include sodium benzoate.

Examples of the benzoic acid ester include propyl p-hydroxybenzoate and butyl p-hydroxybenzoate.

A commercially available formulation such as Strong SANPRESER (manufactured by San-Ei Gen F.F.I., Inc., a mixture of sodium benzoate and butyl benzoate) may be used as the preservative.

The amount of the preservative added for use in one aspect of the present invention is preferably 5 to 1200 ppm by mass, more preferably 10 to 1100 ppm by mass, further preferably 15 to 1000 ppm by mass, still further preferably 20 to 900 ppm by mass.

In the beer-taste beverage according to one aspect of the present invention, an additional preservative other than benzoic acid, benzoate, and benzoic acid ester may be used.

### 1.1.5 Sweetener

The beer-taste beverage according to one aspect of the present invention may be a beverage further supplemented with a sweetener.

Examples of the sweetener for use in one aspect of the present invention include commercially available saccharified solutions obtained by degrading grain-derived starch with an acid or an enzyme, saccharides such as commercially available starch syrups, trisaccharides or higher polysaccharides, sugar alcohols, natural sweeteners such as stevia, and artificial sweeteners.

These sweeteners may each be used singly, or two or more thereof may be used in combination.

The form of such a saccharide may be a liquid such as a solution or may be a solid such as a powder.

The type of the raw material grain of the starch, a method for purifying the starch, and conditions for treatment such as hydrolysis with an enzyme or an acid are not particularly limited. A saccharide with an elevated ratio of maltose may be used by appropriately setting the conditions for hydrolysis with an enzyme or an acid. In addition, for example, sucrose, fructose, glucose, maltose, trehalose, maltotriose and their solutions (molasses) may be used.

Examples of the artificial sweetener include aspartame, acesulfame potassium (acesulfame K), and sucralose.

Examples of the water-soluble dietary fiber include resistant dextrin, polydextrose, guar gum degradation products, pectin, glucomannan, alginic acid, laminarin, fucoidin, and carrageenan. Resistant dextrin or polydextrose is preferred from the viewpoint of general versatility such as stability or safety.

### 1.1.6 Bittering agent and bitterness-imparting agent

The beer-taste beverage according to one aspect of the present invention may be a beverage further supplemented with one or more members selected from a bittering agent and a bitterness-imparting agent.

In the beer-taste beverage according to one aspect of the present invention, bitterness may be conferred by hop, or the bittering agent or the bitterness-imparting agent given below may be used together with hop. Alternatively, the bittering agent or the bitterness-imparting agent given below may be used without the use of hop or instead of hop.

The bittering agent or the bitterness-imparting agent is not particularly limited, and any bitterness-imparting agent for use in usual beer or sparkling liquors can be used. Examples thereof include rosemary, litchi, caraway, juniper berry, sage, bay leaves, quassin, caffein, absinthin, naringin, citrus extracts, quassia extracts, coffee extracts, tea extracts, bitter gourd extracts, lotus germ extracts, krantz aloe extracts, rosemary extracts, litchi extracts, bay leaf extracts, sage extracts, and caraway extracts.

These bittering agents and bitterness-imparting agents may each be used singly, or two or more thereof may be used in combination.

### 1.1.7 Antioxidant

The beer-taste beverage according to one aspect of the present invention may be a beverage further supplemented with an antioxidant.

The antioxidant is not particularly limited, and any antioxidant for use in usual beer or sparkling liquors can be used. Examples thereof include ascorbic acid, erythorbic acid, and catechin.

These antioxidants may each be used singly, or two or more thereof may be used in combination.

### 1.1.8 Fragrance

The beer-taste beverage according to one aspect of the present invention may be a beverage further supplemented with a fragrance.

The fragrance is not particularly limited, and a general beer fragrance can be used. The beer fragrance is used for conferring beer-like flavor.

Examples of the beer fragrance include ester and higher alcohols and specifically include ethyl acetate, isoamyl acetate, n-propanol, isobutanol, acetaldehyde, ethyl caproate, linalool, and 4-vinylguaiacol.

These fragrances may each be used singly, or two or more thereof may be used in combination.

### 1.1.9 Acidulant

The beer-taste beverage according to one aspect of the present invention may be a beverage further supplemented with an acidulant.

Examples of the acidulant include tartaric acid, phosphoric acid, citric acid, gluconic acid, lactic acid, malic acid, phytic acid, acetic acid, succinic acid, glucono delta lactone and their salts.

Among them, at least one member selected from tartaric acid, phosphoric acid, citric acid, gluconic acid, lactic acid, malic acid, phytic acid, acetic acid, succinic acid and their salts is preferred, at least one member selected from tartaric acid, phosphoric acid, citric acid, lactic acid, acetic acid and their salts is more preferred, and at least one member selected from tartaric acid, phosphoric acid, and lactic acid is further preferred.

These acidulants may each be used singly, or two or more thereof may be used in combination.

### 1.1.10 Salt

The beer-taste beverage according to one aspect of the present invention may be a beverage further supplemented with a salt.

Examples of the salt include sodium chloride, acidic potassium phosphate, acidic calcium phosphate, ammonium phosphate, magnesium sulfate, calcium sulfate, potassium metabisulfite, calcium chloride, magnesium chloride, potassium nitrate, and ammonium sulfate.

These salts may each be used singly, or two or more thereof may be used in combination.

### 1.2 Carbon dioxide

The carbon dioxide contained in the beer-taste beverage according to one aspect of the present invention may be added by mixing with carbonated water, or carbon dioxide may be added directly to a raw material liquid.

A sterilization step is generally performed after addition of carbon dioxide. The sterilization step is performed by the addition of dimethyl dicarbonate, which can lower a sterilization temperature and additionally allows the sterilization step to be partially omitted. As a result, a beverage having a high carbon dioxide concentration can be efficiently produced.

The carbon dioxide concentration of the beer-taste beverage according to one aspect of the present invention is preferably 0.460% by mass or more, more preferably 0.470% by mass or more, further preferably 0.480% by mass or more, still further preferably 0.490% by mass or more, particularly preferably 0.500% by mass or more, and is preferably 0.680% by mass or less, more preferably 0.650% by mass or less, further preferably 0.620% by mass or less, still further preferably 0.600% by mass or less, particularly preferably 0.580% by mass or less, from the viewpoint of being a beverage having a feeling of carbonation suitable for a beer-taste beverage.

In the present specification, the carbon dioxide concentration can be determined by dipping a container containing a beverage of interest in a water bath of 20°C for 30 minutes or longer with occasional shaking to adjust the temperature of the beverage to 20°C, followed by measurement using a gas volume measurement apparatus (e.g., GVA-500 (manufactured by Kyoto Electronics Manufacturing Co., Ltd.)).

When the beer-taste beverage according to one aspect of the present invention is a packaged beverage, the carbon dioxide pressure of the packaged beverage can be appropriately adjusted within a range that attains the carbon dioxide concentration described above. The carbon dioxide pressure may be 5.0 kg/cm² or lower, 4.5 kg/cm² or lower, or 4.0 kg/cm² or lower, and may be 0.20 kg/cm² or higher, 0.50 kg/cm² or higher, or 1.0 kg/cm² or higher. These upper limits and lower limits may be combined in any way. The carbon dioxide pressure of the packaged beverage can be, for example, 0.20 kg/cm² or higher and 5.0 kg/cm² or lower, 0.50 kg/cm² or higher and 4.5 kg/cm² or lower, or 1.0 kg/cm² or higher and 4.0 kg/cm² or lower.

In the present specification, such a gas pressure refers to a gas pressure within a container unless otherwise specified.

The pressure can be measured by use of a method well known to those skilled in the art, for example, a method of fixing a sample set to 20°C in an internal gas pressure gauge, then temporarily opening the stopper cock of the internal gas pressure gauge for degassing, closing the stopper cock again, shaking the internal gas pressure gauge, and reading a value when an indicator needle reaches a given position, or can be measured using a commercially available gas pressure measurement apparatus.

### 1.3 Other additives

The beer-taste beverage according to one aspect of the present invention may be supplemented with various additives, if necessary, without interfering with the advantageous effects of the present invention.

Examples of such additives include colorants, foam forming agents, protein materials such as peptide-containing matter, and seasonings such as amino acids.

The colorant is used for imparting beer-like color to the beverage, and a caramel dye or the like can be used. The foam forming agent is used for forming beer-like foam in the beverage or for retaining the foam of the beverage. For example, a plant extract saponin material such as soybean saponin or quillaia saponin, a vegetable protein such as corn protein or soybean protein, and a protein material such as peptide-containing matter or bovine serum albumin can be appropriately used.

### 2. Method for producing beer-taste beverage

Examples of the method for producing the beer-taste beverage according to one aspect of the present invention include, but are not particularly limited to, a production method comprising the step of adding dimethyl dicarbonate.

Hereinafter, specific methods for producing an unfermented non-alcoholic beer-taste beverage will be described.

### 2.1 Method for producing unfermented non-alcoholic beer-taste beverage

The method for producing the unfermented non-alcoholic beer-taste beverage according to one aspect of the present invention is not particularly limited as long as the production method is performed without a fermentation step. Examples thereof include a production method comprising the step of adding dimethyl dicarbonate and specifically include a method comprising the following steps (1a) to (3a):
Step (1a): the step of performing at least one treatment selected from saccharification treatment, boiling treatment, and solid removal treatment using various raw materials to obtain a beverage precursor liquid.
Step (2a): the step of adding carbon dioxide to the beverage precursor liquid obtained in the step (1a).
Step (3a): the step of adding dimethyl dicarbonate.

In the case of producing a beverage having a bitterness unit of 5 BUs or more, the method for producing the unfermented non-alcoholic beer-taste beverage according to one aspect of the present invention preferably comprises the step of adding hop as a raw material. In the case of producing a beverage having a bitterness unit of less than 5 BUs, the method preferably does not comprise the step of adding hop as a raw material.

Hereinafter, each step will be described.

### <Step (1a)>

The step (1a) is the step of performing at least one treatment selected from saccharification treatment, boiling treatment, and solid removal treatment using various raw materials to obtain a beverage precursor liquid.

In the case of using, for example, malt, as one of the various raw materials, the various raw materials including water and malt are added to a preparation kettle or a preparation tank, and an enzyme such as amylase is added thereto, if necessary. Hop, dietary fiber, a preservative, a sweetener, an antioxidant, a bitterness-imparting agent, a fragrance, an acidulant, a dye, and the like may be added as the various raw materials other than malt.

The mixture of the various raw materials is warmed so that starchy raw materials are saccharified to perform saccharification treatment. The temperature and time of the saccharification treatment are appropriately adjusted such that the total nitrogen content and the apparent extract concentration fall within the ranges mentioned above, in consideration of the type of the malt used, a malt ratio, raw materials other than water and malt, etc. After the saccharification treatment, lauter is performed to obtain a saccharified solution.

This saccharified solution may be subjected to boiling treatment.

In the case of using hop, a bittering agent, and the like as raw materials, it is preferred to add these raw materials when this boiling treatment is performed. The raw materials such as hop and a bittering agent may be added after the start of boiling of the saccharified solution and before the completion of the boiling.

After the completion of the boiling treatment, the solution is transferred to a whirl pool and cooled to 0 to 10°C to prepare a cooled solution, after which removal treatment of solids such as coagulated proteins is preferably performed. This treatment can adjust the apparent extract concentration to within the range mentioned above. In this way, a beverage precursor liquid is obtained.

Hop, a bittering agent, and the like may be added to a malt extract supplemented with hot water, instead of the saccharified solution described above, and boiling treatment can be performed to prepare a beverage precursor liquid.

In the case of not using malt as the various raw materials, liquid sugar containing a carbon source, barley, etc. or a nitrogen source as an amino acid-containing raw material other than malt, hop, dietary fiber, a preservative, a sweetener, an antioxidant, a bitterness-imparting agent, a fragrance, an acidulant, a dye, and the like are mixed with hot water to prepare a liquid sugar solution. The liquid sugar solution may be subjected to boiling treatment to prepare a beverage precursor liquid.

In the case of using hop, the hop may be added before boiling treatment or may be added after the start of boiling of the liquid sugar solution and before the completion of the boiling.

### <Step (2a)>

The step (2a) is the step of adding carbon dioxide to the beverage precursor liquid obtained in the step (1a).

As for the method for adding carbon dioxide, the carbon dioxide may be added by mixing the beverage precursor liquid obtained in the step (1a) with carbonated water, or may be added directly to a beverage raw material liquid.

Additives such as a preservative, a sweetener, a fragrance, an acidulant, and a dye may be added, if necessary, when carbon dioxide is added.

### <Step (3a)>

The step (3a) is the step of adding dimethyl dicarbonate. The sterilization treatment of the beverage can be performed by the addition of dimethyl dicarbonate. The step (3a) may be performed at any timing and is preferably performed after the step (2a).

The step (3a) thus carried out can lower a sterilization temperature and additionally allows the sterilization step to be partially omitted. Hence, thermal load on the resulting beverage can be reduced, and decrease in carbon dioxide concentration or decrease in the amount of aroma components is prevented. Thus, an unfermented non-alcoholic beer-taste beverage more suitable as a beer-taste beverage can be produced.

In the step (3a), the amount of the dimethyl dicarbonate added is as mentioned above.

The mixture thus supplemented may be left standing for approximately 1 to 48 hours in order to improve the bactericidal effect of the dimethyl dicarbonate on the beverage while degrading the dimethyl dicarbonate into methanol and water by hydrolysis. This still standing may be performed after packing of the beverage into a container and hermetical closing.

### [Examples]

Hereinafter, the present invention will be described in more detail with reference to Examples. However, the present invention is not limited by these Examples.

### Examples 1a to 23a and Comparative Examples 1a to 3a (Production of unfermented non-alcoholic beer-taste beverage)

In Examples 1a to 8a, Examples 10a to 23a, and Comparative Examples 1a to 3a, a cooled solution was prepared as follows: water and malt were added to a preparation tank to prepare a mash of approximately 50°C. The temperature of the mash was gradually increased to the range of 65 to 72°C and then kept at the predetermined temperature after the increase in temperature for a given time to perform saccharification treatment. After the saccharification treatment, the temperature was increased to a temperature at which enzymes were deactivated. Then, the mash was transferred to a wort lauter tun and lautered to obtain wort. The obtained wort was diluted by the addition of hot water, and hop was added thereto. Boiling treatment was performed at 100°C using a wort kettle. After the boiling treatment, the resultant was transferred to a whirl pool tank where a wort sediment was removed and the resulting wort was cooled to approximately 2°C to obtain a cooled solution. Since fermentation was not carried out, no yeast was added.

In Example 9a, a cooled solution was prepared as follows: soybean protein was dissolved in hot water of 50°C. To the solution, hop was then added, and boiling treatment was performed at 100°C using a wort kettle. After the boiling treatment, the resultant was transferred to a whirl pool tank where a sediment was removed and the resulting wort was cooled to approximately 2°C to obtain a cooled solution. Since fermentation was not carried out in this example, no yeast was added.

The obtained cooled solution was subjected to solid removal treatment to adjust an apparent extract concentration. In this operation, sodium benzoate was further added in the amount shown in Table 4 for Examples 21a to 23a. Then, a fragrance conferring flavor necessary for non-alcoholic beer-taste beverages, and an acidulant in an amount attaining pH of lower than 4.0 were added thereto, and a carbon dioxide concentration was adjusted as shown in Tables 1 to 4 by the further addition of carbon dioxide. Then, dimethyl dicarbonate was added in the amount shown in Tables 1 to 4, and the mixture was left standing for 24 hours for sterilization treatment to obtain an unfermented non-alcoholic beer-taste beverage having an alcohol concentration of less than 1% (v/v). The total nitrogen content of the obtained beverage was adjusted to the value shown in Tables 1 to 4 by appropriately setting the type of the malt, the amount of the malt added, and the temperature and time of the saccharification treatment. The apparent extract concentration was adjusted to the value shown in Tables 1 to 4 by appropriately setting the blending ratios of malt and water and the solid removal treatment conditions, in addition to the settings described above.

The unfermented non-alcoholic beer-taste beverage thus produced and cooled to approximately 4°C was tasted by six regularly trained panelists and sensorily evaluated for the "presence or absence of sweet scent unsuitable for a beer-taste beverage", the "presence or absence of sweet taste left on the tongue unsuitable for a beer-taste beverage" and "drinkability suitable for a beer-taste beverage" at 0.5 intervals of scores in the range of 3.0 (maximum value) to 1.0 (minimum value) on the basis of scoring criteria given below. For the evaluation, samples conformable to the criteria "3.0", "2.0" and "1.0" given below were provided in advance, and the criteria were standardized among the panelists. In any sensory evaluation of Tables 1 to 4, difference by 1.5 or more in score to the same beverage was not confirmed among the panelists. Tables 1 to 4 describe average scores from the panelists.

### [Scoring criteria for presence or absence of sweet scent unsuitable for beer-taste beverage]

"3.0": No sweet scent unsuitable for a beer-taste beverage was perceived.
"2.0": Slight sweet scent unsuitable for a beer-taste beverage was perceived.
"1.0": Strong sweet scent unsuitable for a beer-taste beverage was perceived.

### [Scoring criteria for presence or absence of sweet taste left on tongue unsuitable for beer-taste beverage]

"3.0": No sweet taste left on the tongue unsuitable for a beer-taste beverage was perceived.
"2.0": Slight sweet taste left on the tongue unsuitable for a beer-taste beverage was perceived.
"1.0": Strong sweet taste left on the tongue unsuitable for a beer-taste beverage was perceived.

### [Scoring criteria for drinkability suitable for beer-taste beverage]

"3.0": Good drinkability suitable for a beer-taste beverage was strongly perceived.
"2.0": Good drinkability suitable for a beer-taste beverage was perceived to some extent.
"1.0": Good drinkability suitable for a beer-taste beverage was not perceived.

From the average scores from the panelists as to these three sensory evaluation items, each beer-taste beverage was comprehensively evaluated according to evaluation criteria given below. The results are as shown in Tables 1 to 4.

### [Comprehensive evaluation]

"A": The average scores of all of the three sensory evaluation items were "2.0" or more, and the average scores of two or more of the three sensory evaluation items were "2.5" or more.
"B": The average scores of all of the three sensory evaluation items were "2.0" or more.
"C": The average scores of any one or more of the three sensory evaluation items were less than "2.0".

**Table 1**

| | Example 1a | Example 2a | Example 3a | Example 4a | Example 5a | Example 6a | Example 7a | Example 8a | Example 9a | Example 10a | Comparative Example 1a | Comparative Example 2a | Comparative Example 3a |
|---|---|---|---|---|---|---|---|---|---|---|---|---|---|
| Amount of dimethyl dicarbonate added (mg/L) | 200 | 200 | 200 | 200 | 200 | 200 | 200 | 200 | 200 | 200 | 200 | 200 | 200 |
| Methanol concentration in beverage (mg/L) | 96 | 96 | 96 | 96 | 96 | 96 | 96 | 96 | 96 | 96 | 96 | 96 | 96 |
| Total nitrogen content (mg/100mL) | 10.0 | 40.0 | 0.500 | 40.0 | 0.500 | 10.0 | 10.0 | 1.00 | 19.7 | 13.8 | 0.100 | 10.0 | 10.0 |
| Apparent extract (% by mass) | 0.700 | 1.50 | 1.50 | 0.300 | 0.300 | 0.700 | 0.700 | 0.360 | 1.22 | 2.22 | 0.700 | 0.200 | 3.00 |
| Total nitrogen content (mg/100mL) / Apparent extract (% by mass) | 14.3 | 26.7 | 0.333 | 133 | 1.67 | 14.3 | 14.3 | 2.78 | 16.1 | 6.2 | 0.143 | 50.0 | 3.33 |
| Bitterness unit (BUs) | 20.5 | 19.8 | 19.5 | 20.8 | 19.9 | 13.2 | 36.5 | 19.5 | 23.5 | 13.3 | 20.1 | 20.1 | 20.1 |
| Carbon dioxide concentration (% by mass) | 0.550 | 0.550 | 0.550 | 0.550 | 0.550 | 0.550 | 0.550 | 0.520 | 0.574 | 0.501 | 0.550 | 0.550 | 0.550 |
| Sweet scent unsuitable for beer-taste beverage | 2.5 | 2.8 | 2.8 | 2.3 | 2.3 | 2.5 | 2.5 | 2.4 | 2.6 | 2.7 | 2.5 | 1.5 | 2.9 |
| Sweet taste left on tongue unsuitable for beer-taste beverage | 2.6 | 2.3 | 2.3 | 2.8 | 2.8 | 2.2 | 2.7 | 2.7 | 2.4 | 2.2 | 2.6 | 2.9 | 1.5 |
| Drinkability suitable for beer-taste beverage | 2.5 | 3.0 | 2.0 | 3.0 | 2.0 | 2.2 | 2.5 | 2.1 | 2.7 | 2.4 | 1.5 | 2.5 | 2.5 |
| Comprehensive evaluation | A | A | B | A | B | B | A | B | A | B | C | C | C |

**Table 2**

| | Example 11a | Example 12a | Example 13a | Example 14a | Example 15a |
|---|---|---|---|---|---|
| Amount of dimethyl dicarbonate added (mg/L) | 20 | 20 | 20 | 20 | 20 |
| Methanol concentration in beverage (mg/L) | 9.6 | 9.6 | 9.6 | 9.6 | 9.6 |
| Total nitrogen content (mg/100mL) | 10.0 | 40.0 | 0.500 | 40.0 | 0.500 |
| Apparent extract (% by mass) | 0.700 | 1.50 | 1.50 | 0.300 | 0.300 |
| Total nitrogen content (mg/100mL) / Apparent extract(% by mass) | 14.3 | 26.7 | 0.333 | 133 | 1.67 |
| Bitterness unit (BUs) | 20.4 | 20.4 | 19.5 | 21.5 | 21.0 |
| Carbon dioxide concentration (% by mass) | 0.550 | 0.550 | 0.550 | 0.550 | 0.550 |
| Sweet scent unsuitable for beer-taste beverage | 2.7 | 3.0 | 3.0 | 2.5 | 2.5 |
| Sweet taste left on tongue unsuitable for beer-taste beverage | 2.4 | 2.0 | 2.0 | 2.7 | 2.7 |
| Drinkability suitable for beer-taste beverage | 2.5 | 3.0 | 2.0 | 3.0 | 2.0 |
| Comprehensive evaluation | A | A | B | A | A |

**Table 3**

| | Example 16a | Example 17a | Example 18a | Example 19a | Example 20a |
|---|---|---|---|---|---|
| Amount of dimethyl dicarbonate added (mg/L) | 1000 | 1000 | 1000 | 1000 | 1000 |
| Methanol concentration in beverage (mg/L) | 478 | 478 | 478 | 478 | 478 |
| Total nitrogen content (mg/100mL) | 10.0 | 40.0 | 0.500 | 40.0 | 0.500 |
| Apparent extract (% by mass) | 0.700 | 1.50 | 1.50 | 0.300 | 0.300 |
| Total nitrogen content (mg/100mL) / Apparent extract(% by mass) | 14.3 | 26.7 | 0.333 | 133 | 1.67 |
| Bitterness unit (BUs) | 19.9 | 19.9 | 19.9 | 20.6 | 19.7 |
| Carbon dioxide concentration (% by mass) | 0.550 | 0.550 | 0.550 | 0.550 | 0.550 |
| Sweet scent unsuitable for beer-taste beverage | 2.3 | 2.5 | 2.5 | 2.0 | 2.0 |
| Sweet taste left on tongue unsuitable for beer-taste beverage | 2.7 | 2.5 | 2.5 | 2.9 | 2.9 |
| Drinkability suitable for beer-taste beverage | 2.5 | 3.0 | 2.0 | 3.0 | 2.0 |
| Comprehensive evaluation | A | A | A | A | B |

**Table 4**

| | Example 21a | Example 22a | Example 23a |
|---|---|---|---|
| Amount of dimethyl dicarbonate added (mg/L) | 200 | 200 | 200 |
| Amount of sodium benzoate added (ppm by mass) | 25 | 250 | 800 |
| Methanol concentration in beverage (mg/L) | 96 | 96 | 96 |
| Total nitrogen content (mg/100mL) | 10.0 | 10.0 | 10.0 |
| Apparent extract (% by mass) | 0.700 | 0.700 | 0.700 |
| Total nitrogen content (mg/100mL) / Apparent extract(% by mass) | 14.3 | 14.3 | 14.3 |
| Bitterness unit (BUs) | 21.0 | 27.5 | 35.1 |
| Carbon dioxide concentration (% by mass) | 0.550 | 0.550 | 0.550 |
| Sweet scent unsuitable for beer-taste beverage | 2.5 | 2.5 | 2.5 |
| Sweet taste left on tongue unsuitable for beer-taste beverage | 2.6 | 2.6 | 2.7 |
| Drinkability suitable for beer-taste beverage | 2.5 | 2.5 | 2.5 |
| Comprehensive evaluation | A | A | A |

As seen from the results shown in Tables 1 to 4, the unfermented non-alcoholic beer-taste beverages produced in Examples 1a to 23a had good drinkability suitable for a beer-taste beverage while sweet scent unsuitable for a beer-taste beverage and sweet taste left on the tongue were suppressed. On the other hand, as seen from the results, the beverage of Comparative Example 1a had insufficient drinkability suitable for a beer-taste beverage. Also as seen from the results, the beverage of Comparative Example 2a had strongly perceived sweet scent unsuitable for a beer-taste beverage, and the beverage of Comparative Example 3a had strongly perceived sweet taste left on the tongue unsuitable for a beer-taste beverage.

### Examples 24a and 25a

Each unfermented non-alcoholic beer-taste beverage was produced in the same manner as in Example 1a except that the amount of carbon dioxide added was adjusted so as to attain the carbon dioxide concentration shown in Table 5.

The beverages of Examples 24a and 25a thus produced, and the beverage of Example 1a mentioned above were cooled to approximately 4°C, tasted by six regularly trained panelists, and sensorily evaluated for a "feeling of carbonation suitable for a beer-taste beverage" at 0.5 intervals of scores in the range of 3.0 (maximum value) to 1.0 (minimum value) on the basis of scoring criteria given below. For the evaluation, samples conformable to the criteria "3.0", "2.0" and "1.0" given below were provided in advance, and the criteria were standardized among the panelists. In any sensory evaluation of Table 5, difference by 1.5 or more in score to the same beverage was not confirmed among the panelists. Table 5 describes average scores from the panelists.

### [Scoring criteria for feeling of carbonation suitable for beer-taste beverage]

"3.0": A feeling of carbonation suitable for a beer-taste beverage was excellent.
"2.0": A feeling of carbonation suitable for a beer-taste beverage was good.
"1.0": A feeling of carbonation suitable for a beer-taste beverage was weak.

**Table 5**

| | Example 24a | Example 1a | Example 25a |
|---|---|---|---|
| Amount of dimethyl dicarbonate added (mg/L) | 200 | 200 | 200 |
| Methanol concentration in beverage (mg/L) | 96 | 96 | 96 |
| Total nitrogen content (mg/100mL) | 10.0 | 10.0 | 10.0 |
| Apparent extract (% by mass) | 0.700 | 0.700 | 0.700 |
| Total nitrogen content (mg/100mL) / Apparent extract(% by mass) | 14.3 | 14.3 | 14.3 |
| Bittemess unit (BUs) | 20.5 | 20.5 | 20.5 |
| Carbon dioxide concentration (% by mass) | 0.500 | 0.550 | 0.600 |
| Feeling of carbonation suitable for beer-taste beverage | 2.2 | 2.9 | 2.5 |

From Table 5, the unfermented non-alcoholic beer-taste beverages produced in Examples 24a and 25a and Example 1a were confirmed to have a feeling of carbonation suitable for a beer-taste beverage.

### Examples 1b to 26b and Comparative Examples 1b to 3b

### (Production of fermented beer-taste beverage). These Examples are not part of the present invention.

In Examples 1b to 10b, Examples 12b to 26b, and Comparative Examples 1b to 3b, a cooled solution was prepared as follows: water and malt were added to a preparation tank to prepare a mash of approximately 50°C. The temperature of the mash was gradually increased to the range of 65 to 72°C and then kept at the predetermined temperature after the increase in temperature for a given time to perform saccharification treatment. After the saccharification treatment, the temperature was increased to a temperature at which enzymes were deactivated. Then, the mash was transferred to a wort lauter tun and lautered to obtain wort.

The obtained wort was diluted by the addition of hot water. For Examples 1b to 5b, Examples 12b to 16b, Examples 18b to 22b, Examples 24b to 26b, and Comparative Examples 1b to 3b, hop was added thereto, and boiling treatment was performed at 100°C using a wort kettle. Meanwhile, for Examples 6b to 10b, Example 17b, and Example 23b, no hop was added thereto, and boiling treatment was performed at 100°C using a wort kettle.

After the boiling treatment, the resultant was transferred to a whirl pool tank where a wort sediment was removed and the resulting wort was cooled to approximately 12°C to obtain a cooled solution.

In Example 11b, a cooled solution was prepared as follows: soybean protein was dissolved in hot water of 50°C. To the solution, hop was then added, and boiling treatment was performed at 100°C using a wort kettle. After the boiling treatment, the resultant was transferred to a whirl pool tank where a sediment was removed and the resulting wort was cooled to approximately 12°C to obtain a cooled solution.

Yeast was added to the obtained cooled solution to perform fermentation treatment. After the fermentation treatment, the yeast was removed so that an apparent extract concentration was adjusted as shown in Tables 6 to 9. Sodium benzoate was further added in the amount shown in Table 9 for Examples 21b to 23b.

Then, dimethyl dicarbonate was added in the amount described in Tables 6 to 9, and the mixture was left standing for 24 hours for sterilization treatment. In this way, each alcohol-containing fermented beer-taste beverage having the carbon dioxide concentration shown in Tables 6 to 9 and an alcohol concentration of 1% (v/v) or more was obtained. The total nitrogen content of the obtained beverage was adjusted to the value shown in Tables 6 to 9 by appropriately setting the type of the malt, the amount of the malt added, and the temperature and time of the saccharification treatment.

The fermented beer-taste beverage thus produced and cooled to approximately 4°C was tasted by six regularly trained panelists and sensorily evaluated for the "presence or absence of sweet scent unsuitable for a beer-taste beverage", the "presence or absence of sweet taste left on the tongue unsuitable for a beer-taste beverage" and "drinkability suitable for a beer-taste beverage" at 0.5 intervals of scores in the range of 3.0 (maximum value) to 1.0 (minimum value) on the basis of scoring criteria given below. For the evaluation, samples conformable to the criteria "3.0", "2.0" and "1.0" given below were provided in advance, and the criteria were standardized among the panelists. In any sensory evaluation of Tables 6 to 9, difference by 1.5 or more in score to the same beverage was not confirmed among the panelists. Tables 6 to 9 describe average scores from the panelists.

### [Scoring criteria for presence or absence of sweet scent unsuitable for beer-taste beverage]

"3.0": No sweet scent unsuitable for a beer-taste beverage was perceived.
"2.0": Slight sweet scent unsuitable for a beer-taste beverage was perceived.
"1.0": Strong sweet scent unsuitable for a beer-taste beverage was perceived.

### [Scoring criteria for presence or absence of sweet taste left on tongue unsuitable for beer-taste beverage]

"3.0": No sweet taste left on the tongue unsuitable for a beer-taste beverage was perceived.
"2.0": Slight sweet taste left on the tongue unsuitable for a beer-taste beverage was perceived.
"1.0": Strong sweet taste left on the tongue unsuitable for a beer-taste beverage was perceived.

### [Scoring criteria for drinkability suitable for beer-taste beverage]

"3.0": Good drinkability suitable for a beer-taste beverage was strongly perceived.
"2.0": Good drinkability suitable for a beer-taste beverage was perceived to some extent.
"1.0": Good drinkability suitable for a beer-taste beverage was not perceived.

From the average scores from the panelists as to these three sensory evaluation items, each beer-taste beverage was comprehensively evaluated according to evaluation criteria given below. The results are as shown in Tables 6 to 9.

### [Comprehensive evaluation]

"A": The average scores of all of the three sensory evaluation items were "2.0" or more, and the average scores of two or more of the three sensory evaluation items were "2.5" or more.
"B": The average scores of all of the three sensory evaluation items were "2.0" or more.
"C": The average scores of any one or more of the three sensory evaluation items were less than "2.0".

**Table 6**

| | Example 1b | Example 2b | Example 3b | Example 4b | Example 5b | Example 6b | Example 7b | Example 8b | Example 9b | Example 10b | Example 11b | Comparative Example 1b | Comparative Example 2b | Comparative Example 3b |
|---|---|---|---|---|---|---|---|---|---|---|---|---|---|---|
| Amount of dimethyl dicarbonate added (mg/L) | 200 | 200 | 200 | 200 | 200 | 200 | 200 | 200 | 200 | 200 | 200 | 200 | 200 | 200 |
| Methanol concentration in beverage (mg/L) | 96 | 96 | 96 | 96 | 96 | 96 | 96 | 96 | 96 | 96 | 96 | 96 | 96 | 96 |
| Total nitrogen content (mg/100mL) | 65 | 160 | 5.5 | 160 | 5.5 | 65 | 160 | 5.5 | 160 | 5.5 | 65 | 1.0 | 65 | 65 |
| Apparent extract (% by mass) | 1.4 | 3.5 | 3.5 | 0.3 | 0.3 | 1.4 | 3.5 | 3.5 | 0.3 | 0.3 | 1.4 | 1.4 | 0.2 | 4.0 |
| Total nitrogen content (mg/100mL) / Apparent extract(% by mass) | 46.4 | 45.7 | 1.6 | 533.3 | 18.3 | 46.4 | 45.7 | 1.6 | 533.3 | 18.3 | 46.4 | 0.7 | 325.0 | 16.3 |
| Bitterness unit (BUs) | 21.0 | 19.8 | 19.5 | 21.0 | 20.2 | 0.3 | 0.2 | 0.1 | 0.1 | 0.1 | 39.4 | 20.1 | 20.1 | 20.1 |
| Carbon dioxide concentration (% by mass) | 0.540 | 0.541 | 0.545 | 0.539 | 0.545 | 0.539 | 0.541 | 0.541 | 0.539 | 0.545 | 0.540 | 0.541 | 0.542 | 0.539 |
| Sweet scent unsuitable for beer-taste beverage | 2.5 | 2.7 | 2.7 | 2.3 | 2.3 | 2.4 | 2.6 | 2.6 | 2.2 | 2.2 | 2.6 | 2.3 | 1.4 | 2.7 |
| Sweet taste left on tongue unsuitable for beer-taste beverage | 2.6 | 2.3 | 2.3 | 2.8 | 2.8 | 2.5 | 2.2 | 2.2 | 2.7 | 2.7 | 2.7 | 2.5 | 2.8 | 1.4 |
| Drinkability suitable for beer-taste beverage | 2.5 | 3.0 | 2.0 | 3.0 | 2.0 | 2.4 | 2.9 | 2.0 | 2.8 | 2.0 | 2.5 | 1.4 | 2.3 | 2.3 |
| Comprehensive evaluation | A | A | B | A | B | B | A | B | A | B | A | C | C | C |

**Table 7**

| | Example 12b | Example 13b | Example 14b | Example 15b | Example 16b | Example 17b |
|---|---|---|---|---|---|---|
| Amount of dimethyl dicarbonate added (mg/L) | 20 | 20 | 20 | 20 | 20 | 20 |
| Methanol concentration in beverage (mg/L) | 9.6 | 9.6 | 9.6 | 9.6 | 9.6 | 9.6 |
| Total nitrogen content (mg/100mL) | 65 | 160 | 5.5 | 160 | 5.5 | 65 |
| Apparent extract (% by mass) | 1.4 | 3.5 | 3.5 | 0.3 | 0.3 | 1.4 |
| Total nitrogen content (mg/100mL) / Apparent extract(% by mass) | 46.4 | 45.7 | 1.6 | 533.3 | 18.3 | 46.4 |
| Bitterness unit (BUs) | 22.0 | 21.0 | 21.6 | 21.4 | 21.2 | 0.1 |
| Carbon dioxide concentration (% by mass) | 0.542 | 0.541 | 0.533 | 0.543 | 0.545 | 0.540 |
| Sweet scent unsuitable for beer-taste beverage | 2.8 | 2.9 | 2.9 | 2.5 | 2.5 | 2.5 |
| Sweet taste left on tongue unsuitable for beer-taste beverage | 2.4 | 2.0 | 2.0 | 2.7 | 2.7 | 2.2 |
| Drinkability suitable for beer-taste beverage | 2.5 | 3.0 | 2.0 | 3.0 | 2.0 | 2.2 |
| Comprehensive evaluation | A | A | B | A | A | B |

**Table 8**

| | Example 18b | Example 19b | Example 20b | Example 21b | Example 22b | Example 23b |
|---|---|---|---|---|---|---|
| Amount of dimethyl dicarbonate added (mg/L) | 1000 | 1000 | 1000 | 1000 | 1000 | 1000 |
| Methanol concentration in beverage (mg/L) | 478 | 478 | 478 | 478 | 478 | 478 |
| Total nitrogen content (mg/100mL) | 65 | 160 | 5.5 | 160 | 5.5 | 65 |
| Apparent extract (% by mass) | 1.4 | 3.5 | 3.5 | 0.3 | 0.3 | 1.4 |
| Total nitrogen content (mg/100mL) / Apparent extract(% by mass) | 46.4 | 45.7 | 1.6 | 533.3 | 18.3 | 46.4 |
| Bitterness unit (BUs) | 20.1 | 20.6 | 19.4 | 20.8 | 20.1 | 0.1 |
| Carbon dioxide concentration (% by mass) | 0.542 | 0.545 | 0.540 | 0.541 | 0.545 | 0.545 |
| Sweet scent unsuitable for beer-taste beverage | 2.2 | 2.4 | 2.4 | 2.0 | 2.0 | 2.2 |
| Sweet taste left on tongue unsuitable for beer-taste beverage | 2.7 | 2.5 | 2.5 | 2.9 | 2.9 | 2.6 |
| Drinkability suitable for beer-taste beverage | 2.5 | 3.0 | 2.0 | 3.0 | 2.0 | 2.6 |
| Comprehensive evaluation | A | A | A | A | B | A |

**Table 9**

| | Example 24b | Example 25b | Example 26b |
|---|---|---|---|
| Amount of dimethyl dicarbonate added (mg/L) | 200 | 200 | 200 |
| Amount of sodium benzoate added (ppm by mass) | 25 | 250 | 800 |
| Methanol concentration in beverage (mg/L) | 96 | 96 | 96 |
| Total nitrogen content (mg/100mL) | 65 | 65 | 65 |
| Apparent extract (% by mass) | 1.4 | 1.4 | 1.4 |
| Total nitrogen content (mg/100mL) / Apparent extract(% by mass) | 46.4 | 46.4 | 46.4 |
| Bitterness unit (BUs) | 16.1 | 20.8 | 27.1 |
| Carbon dioxide concentration (% by mass) | 0.540 | 0.540 | 0.540 |
| Sweet scent unsuitable for beer-taste beverage | 2.4 | 2.4 | 2.5 |
| Sweet taste left on tongue unsuitable for beer-taste beverage | 2.5 | 2.6 | 2.5 |
| Drinkability suitable for beer-taste beverage | 2.5 | 2.5 | 2.5 |
| Comprehensive evaluation | A | A | A |

As seen from the results shown in Tables 6 to 9, the fermented beer-taste beverages produced in Examples 1b to 26b had good drinkability suitable for a beer-taste beverage while sweet scent unsuitable for a beer-taste beverage and sweet taste left on the tongue were suppressed. On the other hand, as seen from the results, the beverage of Comparative Example 1b had insufficient drinkability suitable for a beer-taste beverage. Also as seen from the results, the beverage of Comparative Example 2b had strongly perceived sweet scent unsuitable for a beer-taste beverage, and the beverage of Comparative Example 3b had strongly perceived sweet taste left on the tongue unsuitable for a beer-taste beverage.

### Examples 27b to 29b. These Examples are not part of the present invention.

Each fermented beer-taste beverage was produced in the same manner as in Example 1b except that the amount of carbon dioxide was adjusted so as to attain the carbon dioxide concentration shown in Table 10.

The beverages of Examples 27b to 29b thus produced were cooled to approximately 4°C, tasted by six regularly trained panelists, and sensorily evaluated for a "feeling of carbonation suitable for a beer-taste beverage" at 0.5 intervals of scores in the range of 3.0 (maximum value) to 1.0 (minimum value) on the basis of scoring criteria given below. For the evaluation, samples conformable to the criteria "3.0", "2.0" and "1.0" given below were provided in advance, and the criteria were standardized among the panelists. In any sensory evaluation of Table 10, difference by 1.5 or more in score to the same beverage was not confirmed among the panelists. Table 10 describes average scores from the panelists.

### [Scoring criteria for feeling of carbonation suitable for beer-taste beverage]

"3.0": A feeling of carbonation suitable for a beer-taste beverage was excellent.
"2.0": A feeling of carbonation suitable for a beer-taste beverage was good.
"1.0": A feeling of carbonation suitable for a beer-taste beverage was weak.

**Table 10**

| | Example 27b | Example 28b | Example 29b |
|---|---|---|---|
| Amount of dimethyl dicarbonate added (mg/L) | 200 | 200 | 200 |
| Methanol concentration in beverage (mg/L) | 96 | 96 | 96 |
| Total nitrogen content (mg/100mL) | 65 | 65 | 65 |
| Apparent extract (% by mass) | 1.4 | 1.4 | 1.4 |
| Total nitrogen content (mg/100mL) / Apparent extract(% by mass) | 46.4 | 46.4 | 46.4 |
| Bitterness unit (BUs) | 20.5 | 20.5 | 20.5 |
| Carbon dioxide concentration (% by mass) | 0.489 | 0.540 | 0.600 |
| Feeling of carbonation suitable for beer-taste beverage | 2.2 | 2.9 | 2.5 |

From Table 10, the fermented beer-taste beverages produced in Examples 27b to 29b were confirmed to have a feeling of carbonation suitable for a beer-taste beverage.

## Claims

1. A beer-taste beverage having a methanol concentration of 8.0 to 600 mg/L, a total nitrogen content of 0.3 mg/100 mL or more, an apparent extract concentration of 0.26 to 2.8% by mass, and is an unfermented non-alcoholic beer-taste beverage.

2. The beer-taste beverage according to claim 1, wherein a ratio of the total nitrogen content (unit: mg/100 mL) to the apparent extract concentration (unit: % by mass) [total nitrogen content/apparent extract concentration] is 0.15 to 150.

3. The beer-taste beverage according to claim 1 or 2, wherein the beer-taste beverage is further supplemented with a preservative selected from benzoic acid, benzoate, and benzoic acid ester.

4. The beer-taste beverage according to any one of claims 1 to 3, wherein the beer-taste beverage has a bitterness unit of 5 to 50 BUs.

5. The beer-taste beverage according to any one of claims 1 to 4, wherein the beer-taste beverage has a carbon dioxide concentration of 0.460% by mass or more.

6. The beer-taste beverage according to any one of claims 1 to 5, wherein the beer-taste beverage is a packaged beverage.

## Patentansprüche

1. Ein Getränk mit Biergeschmack, das eine Methanolkonzentration von 8,0 bis 600 mg/l, einen Gesamtstickstoffgehalt von 0,3 mg/100 ml oder mehr, eine scheinbare Extraktkonzentration von 0,26 bis 2,8 Massen-% aufweist und ein unvergorenes alkoholfreies Getränk mit Biergeschmack ist.

2. Das Getränk mit Biergeschmack nach Anspruch 1, wobei ein Verhältnis des Gesamtstickstoffgehalts (Einheit: mg/100 ml) zu der scheinbaren Extraktkonzentration (Einheit: Massen-%) [Gesamtstickstoffgehalt/scheinbare Extraktkonzentration] 0,15 bis 150 beträgt.

3. Das Getränk mit Biergeschmack nach Anspruch 1 oder 2, wobei das Getränk mit Biergeschmack ferner mit einem Konservierungsmittel, ausgewählt aus Benzoesäure, Benzoat und Benzoesäureester, ergänzt ist.

4. Das Getränk mit Biergeschmack nach einem der Ansprüche 1 bis 3, wobei das Getränk mit Biergeschmack eine Bittereinheit von 5 bis 50 BU aufweist.

5. Das Getränk mit Biergeschmack nach einem der Ansprüche 1 bis 4, wobei das Getränk mit Biergeschmack eine Kohlendioxidkonzentration von 0,460 Massen-% oder mehr aufweist.

6. Das Getränk mit Biergeschmack nach einem der Ansprüche 1 bis 5, wobei das Getränk mit Biergeschmack ein abgepacktes Getränk ist.

## Revendications

1. Boisson au goût de bière ayant une concentration de méthanol de 8,0 à 600 mg/l, une teneur en azote totale de 0,3 mg/100 ml ou plus, une concentration d'extrait apparente de 0,26 à 2,8 % en masse, et qui est une boisson au goût de bière sans alcool non fermentée.

2. Boisson au goût de bière selon la revendication 1, dans laquelle le rapport de la teneur totale en azote (unité : mg/100 ml) à la concentration apparente d'extrait (unité : % en masse) [teneur totale en azote / concentration apparente d'extrait] est de 0,15 à 150.

3. Boisson au goût de bière selon la revendication 1 ou 2, laquelle boisson au goût de bière est en outre supplémentée par un conservateur choisi parmi l'acide benzoïque, un benzoate, et un ester d'acide benzoïque.

4. Boisson au goût de bière selon l'une quelconque des revendications 1 à 3, laquelle boisson au goût de bière a une unité d'amertume de 5 à 50 BU.

5. Boisson au goût de bière selon l'une quelconque des revendications 1 à 4, laquelle boisson au goût de bière a une concentration de dioxyde de carbone de 0,460 % en masse ou plus.

6. Boisson au goût de bière selon l'une quelconque des revendications 1 à 5, laquelle boisson au goût de bière est une boisson conditionnée.
